(19) Europäisches Patentamt
European Patent Office
Office européen des brevets

(11) **EP 3 338 260 B1**

(12) **FASCICULE DE BREVET EUROPEEN**

(45) Date de publication et mention de la délivrance du brevet:
**15.06.2022 Bulletin 2022/24**

(21) Numéro de dépôt: **16760133.5**

(22) Date de dépôt: **05.08.2016**

(51) Classification Internationale des Brevets (IPC):
**G08B 21/06** (2006.01)    **B60W 40/08** (2012.01)

(52) Classification Coopérative des Brevets (CPC):
**G08B 21/06; B60W 40/08;** B60W 2040/0818;
B60W 2520/10; B60W 2540/10; B60W 2540/12;
B60W 2540/18

(86) Numéro de dépôt international:
**PCT/FR2016/052039**

(87) Numéro de publication internationale:
**WO 2017/029444 (23.02.2017 Gazette 2017/08)**

(54) **PROCÉDÉ DE DÉTERMINATION D'UN NIVEAU D'ATTENTION D'UN CONDUCTEUR D'UN VÉHICULE AUTOMOBILE ET MÉTHODE DE STIMULATION DE L'ATTENTION D'UN CONDUCTEUR D'UN VÉHICULE AUTOMOBILE**

VERFAHREN ZUR BESTIMMUNG DES AUFMERKSAMKEITSGRADES EINES FAHRERS EINES KRAFTFAHRZEUGS UND VERFAHREN ZUR STIMULIERUNG DER AUFMERKSAMKEIT EINES FAHRERS EINES KRAFTFAHRZEUGS

METHOD FOR DETERMINING THE LEVEL OF ATTENTION OF A DRIVER OF A MOTOR VEHICLE AND METHOD FOR STIMULATING THE ATTENTION OF A DRIVER OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.08.2015 FR 1557793**

(43) Date de publication de la demande:
**27.06.2018 Bulletin 2018/26**

(73) Titulaire: **Renault s.a.s**
**92100 Boulogne Billancourt (FR)**

(72) Inventeurs:
• **ILLY, Herve**
  **92190 Meudon (FR)**
• **AMEYOE, Ablamvi**
  **78280 Guyancourt (FR)**

• **CHEVREL, Philippe**
  **44470 Carquefou (FR)**
• **MARS, Franck**
  **44400 Reze (FR)**
• **LE CARPENTIER, Eric**
  **44700 Orvault (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**WO-A1-03/039914        DE-A1-102005 026 479**
**DE-T5-112012 006 127**

**Description**

DOMAINE TECHNIQUE AUQUEL SE RAPPORTE L'INVENTION

La présente invention concerne de manière générale le domaine des aides à la conduite pour les conducteurs de véhicules automobiles.

Elle concerne plus particulièrement un procédé de détermination d'un niveau d'attention d'un conducteur, comprenant les étapes suivantes :

a) on acquiert une position effective d'un organe de pilotage du véhicule automobile,
b) on acquiert au moins une donnée relative à un environnement dans lequel évolue ledit véhicule automobile,
c1) on détermine, en fonction de ladite donnée relative à l'environnement dans lequel évolue le véhicule automobile, une position cible dans laquelle l'organe de pilotage devrait être placé si le niveau d'attention du conducteur était élevé, et
f) on en déduit le niveau d'attention recherché.

L'invention concerne également une méthode de stimulation de l'attention d'un conducteur d'un véhicule automobile.

ARRIERE-PLAN TECHNOLOGIQUE

Au cours d'un trajet d'un véhicule automobile, il peut arriver que le conducteur réduise l'attention qu'il porte à la conduite de ce véhicule, par exemple à cause d'un état de fatigue, ou parce qu'il consacre une partie de son attention à une activité secondaire telle que la recherche d'un itinéraire sur une carte routière.

Cette baisse d'attention rend la conduite du véhicule moins précise, et peut, dans certains cas, exposer le véhicule à un risque d'accident accru.

Aussi est-il particulièrement intéressant de déterminer un niveau d'attention dans la conduite de ce véhicule, afin par exemple de déclencher un signal sonore alertant ce conducteur d'une baisse d'attention lorsque celle-ci est détectée.

On connait du document US 6061610 un procédé permettant de détecter que le conducteur d'un véhicule a une activité secondaire, en plus de la conduite de ce véhicule. Au cours de ce procédé, la position angulaire du volant de direction est mesurée à plusieurs instants successifs. Une position angulaire ultérieure du volant, qui est supposée correspondre à une conduite attentive du véhicule, est ensuite prédite par lissage et extrapolation des positions angulaires du volant mesurées antérieurement. Une comparaison de cette position angulaire ultérieure prédite et d'une position angulaire mesurée sert ensuite de base pour détecter si le conducteur du véhicule a une activité secondaire. La demanderesse a constaté que ce procédé de détection s'avère peu efficace lorsque le véhicule évolue sur une route sinueuse, ou dans un contexte de trafic routier dense.

On connait du document DE112012006127T5 un système de détection de bas niveau de conscience du conducteur sur route courbe.

On connait du document WO03039914A1 un système d'information embarqué dans un véhicule permettant de produire des informations en fonction du style de conduite.

On connait du document DE102005026479A1 un procédé et une unité de commande pour détecter le moment où le conducteur d'un véhicule automobile devient inattentif.

OBJET DE L'INVENTION

Par rapport à l'état de la technique précité, la présente invention propose un nouveau procédé de détermination du niveau d'attention d'un conducteur d'un véhicule automobile, conçu pour améliorer l'efficacité de cette détermination quels que soient les lieux et conditions de circulation.

Plus particulièrement, on propose selon l'invention un procédé tel que défini en introduction, comprenant en outre les étapes suivantes, l'exécution de l'ensemble des étapes a) à e) étant répétée en continu:

c2) on détermine une grandeur de rappel de l'organe de pilotage vers une position de repos, en fonction au moins de la position effective de cet organe de pilotage,
c3) on détermine une grandeur cible, représentative d'une action que le conducteur devrait effectuer sur ledit organe de pilotage si le niveau d'attention du conducteur était élevé, en fonction de la position cible, de la position effective de l'organe de pilotage du véhicule, et de ladite grandeur de rappel de l'organe de pilotage,
d) on acquiert une grandeur effective représentative d'une action de commande du conducteur sur ledit organe de

**EP 3 338 260 B1**

pilotage,
e) on compare ladite grandeur effective et ladite grandeur cible, et
f) on détermine ledit niveau d'attention en fonction du résultat de la comparaison réalisée à l'étape e) en sélectionnant les différences (TPE(j)) calculées pendant un premier intervalle temporel, en calculant une première valeur efficace (VEc (k)) des différences (TPE(j)) sélectionnées, de manière à déduire ledit niveau d'attention du conducteur du véhicule automobile en fonction de ladite première valeur efficace (VEc(k)),caractérisé en ce qu'à l'étape f), on sélectionne les différences (TPE(j)) calculées pendant un second intervalle temporel plus long que le premier intervalle temporel, on calcule une seconde valeur efficace (VEL (k)) des différences (TPE(j)) sélectionnées, et on déduit ledit niveau d'attention du conducteur du véhicule automobile en fonction de ladite seconde valeur efficace (VEL (k)).

La prise en compte à la fois de cette grandeur de rappel, de la position effective de l'organe de pilotage du véhicule, et d'une position cible à laquelle l'organe de pilotage devrait être placé si le niveau d'attention du conducteur était élevé permet de prédire de manière avantageusement précise et réaliste une réaction du conducteur à la situation dans laquelle se trouve le véhicule.

La comparaison de cette réaction prédite et d'une réaction effectivement exercée par le conducteur permet alors de déterminer un niveau d'attention de ce conducteur de manière particulièrement fiable, et cela dans des contextes de conduite variés, aussi bien en ligne droite que pour une conduite sur une route sinueuse, ou dans un contexte de trafic routier dense.

Parmi d'autres caractéristiques avantageuses du procédé de détermination conforme à l'invention, on peut citer de manière non exhaustive les suivantes :

- ladite position cible est déterminée à l'étape c1) en fonction d'un premier angle, formé entre le véhicule automobile et une portion de la route sur laquelle circule ledit véhicule automobile, éloignée du véhicule automobile, et d'un deuxième angle, fonction d'un angle formé entre le véhicule automobile et une autre portion de ladite route, proche du véhicule automobile, lesdits premier et deuxième angles étant déterminés en fonction de ladite donnée relative à l'environnement dans lequel évolue le véhicule automobile ;
- à l'étape c1), ledit deuxième angle influe d'autant plus sur la valeur de ladite position cible que la vitesse du véhicule est petite ;
- l'exécution de l'ensemble des étapes a) à e) étant répétée en continu, à chaque étape e), ladite comparaison consiste à calculer une différence entre ladite grandeur effective et ladite grandeur cible, et à l'étape f), on sélectionne les différences calculées pendant un premier intervalle temporel, on calcule une première valeur efficace des différences sélectionnées, et on déduit ledit niveau d'attention du conducteur du véhicule automobile en fonction de ladite première valeur efficace ;
- à l'étape f), on sélectionne les différences calculées pendant un second intervalle temporel plus long que le premier intervalle temporel, on calcule une seconde valeur efficace des différences sélectionnées, et on déduit ledit niveau d'attention du conducteur du véhicule automobile en fonction de ladite seconde valeur efficace ;
- plus particulièrement, le niveau d'attention est par exemple déduit en comparant la première valeur efficace et la seconde valeur efficace ;
- on détermine ladite grandeur cible, à l'étape c3), au moyen d'un modèle mathématique qui est représentatif du comportement neuromusculaire du conducteur et qui tient compte de son temps de réaction neuromusculaire et/ou de sa raideur de conduite ;
- le temps de réaction neuromusculaire et/ou la raideur de conduite du conducteur sont déterminés lors d'une étape d'identification réalisée antérieurement aux étapes a) à f), en fonction de plusieurs acquisitions successives de la position effective de l'organe de pilotage du véhicule, de la donnée relative à l'environnement dans lequel évolue le véhicule automobile, et de la grandeur effective représentative d'une action de commande du conducteur sur ledit organe de pilotage ;
- on détermine ladite grandeur cible, à l'étape c3), en fonction de plusieurs acquisitions successives de la position effective de l'organe de pilotage du véhicule et/ou en fonction de plusieurs acquisitions successives de la donnée relative à l'environnement dans lequel évolue le véhicule automobile ;
- ladite position de l'organe de pilotage du véhicule automobile est la position angulaire d'un volant de direction de ce véhicule automobile ; et
- ladite grandeur cible est un couple cible que le conducteur devrait exercer sur le volant de direction du véhicule si son niveau d'attention était élevé, et ladite grandeur effective est le couple effectivement exercé par le conducteur sur le volant de direction du véhicule.

L'invention propose également une méthode de stimulation de l'attention d'un conducteur d'un véhicule automobile, au cours de laquelle :

- on détermine un niveau d'attention du conducteur du véhicule par l'exécution d'un procédé tel que décrit ci-dessus, et
- on déclenche un signal d'avertissement à destination du conducteur, lorsque le niveau d'attention précédemment déterminé est inférieur à un seuil d'attention prédéterminé.

## DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est un organigramme qui représente schématiquement les étapes d'un procédé de détermination de l'attention d'un conducteur d'un véhicule automobile selon l'invention, et une méthode de stimulation de l'attention de ce conducteur selon l'invention, basée sur ce procédé de détermination,
- la figure 2 représente schématiquement, sous la forme d'un schémabloc, un modèle mathématique qui est représentatif du comportement neuromusculaire d'un conducteur et qui est utilisé au cours du procédé de détermination de la figure 1,
- les figures 3A à 3D représentent schématiquement l'évolution au cours du temps de différentes grandeurs évaluées conformément au procédé de détermination de la figure 1, lors d'un trajet sur une route peu sinueuse, et
- les figures 4A à 4D représentent schématiquement l'évolution au cours du temps des mêmes grandeurs que sur les figures 3A à 3D, mais lors d'un trajet sur une route sinueuse.

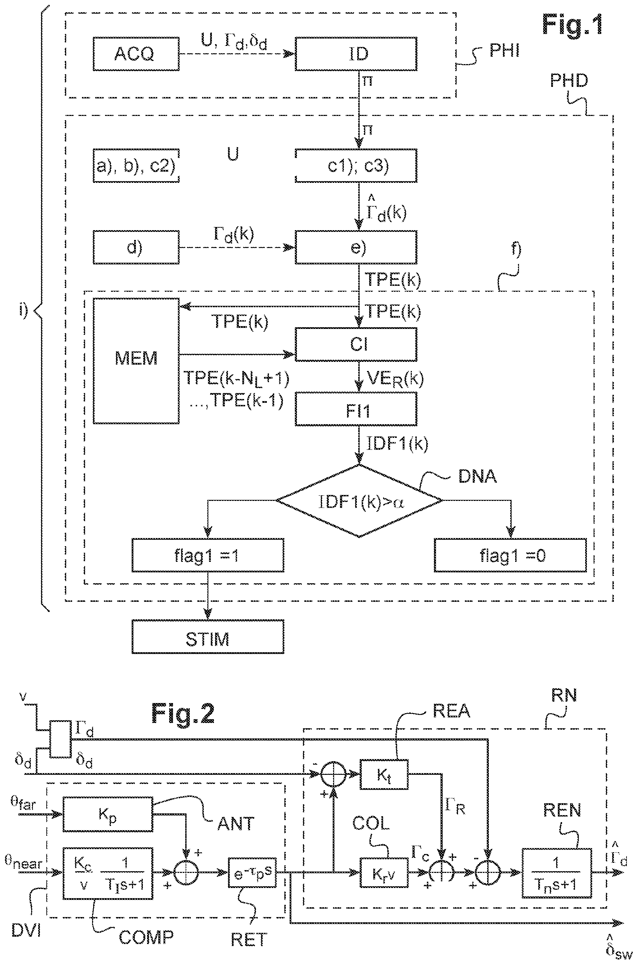

Sur la figure 1, on a représenté les principales étapes d'un procédé de détermination de l'attention d'un conducteur d'un véhicule automobile.

De manière préliminaire, on notera que pour mettre en œuvre ce procédé, le véhicule automobile sera équipé d'un calculateur comportant un processeur, une mémoire vive MEM, une mémoire morte, et différentes interfaces d'entrée et de sortie.

Grâce à ses interfaces d'entrée, le calculateur est adapté à recevoir des signaux d'entrée provenant de différents capteurs. Parmi ces signaux d'entrée, le calculateur reçoit des images provenant d'une caméra orientée vers une zone située à l'avant du véhicule.

La mémoire morte mémorise des données utilisées dans le cadre du procédé décrit ci-dessous.

Elle mémorise notamment une application informatique, constituée de programmes d'ordinateur comprenant des instructions dont l'exécution par le processeur permet la mise en œuvre par le calculateur du procédé décrit ci-après.

Enfin, grâce à ses interfaces de sortie, le contrôleur est adapté à transmettre des signaux de sortie, dont notamment un signal de commande d'un organe permettant d'éveiller l'attention du conducteur.

Ce procédé comprend :

- une phase d'identification PHI de paramètres d'un modèle mathématique qui est représentatif du comportement neuromusculaire de ce conducteur, et
- une phase de diagnostic PHD, au cours de laquelle on détermine un niveau d'attention de ce conducteur, en appliquant audit modèle mathématique les paramètres précédemment identifiés.

Sur la figure 1, on a également représenté les principales étapes d'une méthode de stimulation de l'attention de ce conducteur, selon l'invention, permettant d'avertir ce dernier du fait que son niveau d'attention est faible.

Cette méthode de stimulation comprend les étapes du procédé précité, suivies ici d'une étape de stimulation STIM au cours de laquelle on déclenche un signal d'avertissement à destination du conducteur, lorsque le niveau d'attention précédemment déterminé est inférieur à un seuil d'attention prédéterminé.

Le modèle mathématique qui est représentatif du comportement neuromusculaire du conducteur (figure 2) permet de déterminer une grandeur cible, représentative d'une action que le conducteur devrait effectuer sur un organe de pilotage du véhicule si son niveau d'attention était élevé, en fonction notamment :

- d'une donnée relative à l'environnement dans lequel évolue le véhicule, et
- d'une position effective de l'organe de pilotage du véhicule.

L'organe de pilotage du véhicule qui sera ici considéré est le volant de direction de ce véhicule.

En variante, on aurait pu envisager qu'il s'agisse d'un autre organe, par exemple de la pédale d'accélérateur et/ou de la pédale de frein.

Alors ici, le modèle mathématique permet plus précisément de déterminer un vecteur de sortie Y = $[\hat{\Gamma}_d, \hat{\delta}_{SW}]^T$ dont les composantes comprennent :

- ladite grandeur cible, à savoir ici un couple cible $\hat{\Gamma}_d$ que le conducteur devrait exercer sur le volant de direction du véhicule si son niveau d'attention était élevé, et
- une position cible dans laquelle l'organe de pilotage devrait être placé si le niveau d'attention du conducteur était élevé, à savoir ici une position angulaire cible $\hat{\delta}_{SW}$ dans laquelle le volant de direction devrait être placé si le niveau d'attention du conducteur était élevé.

En variante, la grandeur cible pourrait correspondre directement à cette position angulaire cible $\hat{\delta}_{SW}$, ou encore être obtenue par une combinaison de ce couple et de cette position angulaire cibles $\hat{\Gamma}_d$, $\hat{\delta}_{SW}$.

Le vecteur de sortie $Y = [\hat{\Gamma}_d, \hat{\delta}_{SW}]^T$ de ce modèle mathématique est déterminé ici en fonction d'un vecteur d'entrée $U = [\Gamma_S, \delta_d, \theta_{far}, \theta_{near}]^T$ dont les composantes comprennent :

- une grandeur de rappel de cet organe de pilotage vers une position de repos, en l'occurrence ici un couple de rappel $\Gamma_S$ du volant de direction du véhicule, qui a tendance à positionner ce volant dans une position angulaire médiane, c'est-à-dire dans la position angulaire pour laquelle les roues du véhicule sont alignées avec l'axe avant-arrière de ce véhicule,
- la position effective (c'est-à-dire la position réelle instantanée) de l'organe de pilotage du véhicule, en l'occurrence ici une position angulaire effective $\delta_d$ du volant de direction du véhicule,
- un premier angle $\theta_{far}$ formé entre le véhicule automobile et une portion de la route sur laquelle il circule, éloignée du véhicule automobile, et
- un deuxième angle $\theta_{near}$, fonction d'un angle $\theta_{prox}$ formé entre le véhicule automobile et une autre portion de ladite route, proche du véhicule automobile.

La position angulaire effective $\delta_d$ de ce volant de direction est acquise au moyen d'un capteur qui l'équipe ou qui équipe une colonne de direction du véhicule.

Le couple de rappel $\Gamma_s$ du volant de direction est une grandeur représentative de la tendance de ce volant de direction à revenir dans sa position angulaire médiane (celle pour laquelle le véhicule se déplace en ligne droite). Le couple de rappel $\Gamma_s$ dépend notamment de la vitesse v du véhicule : le volant de direction a d'autant plus tendance à revenir dans cette position angulaire que cette vitesse v est élevée.

Aussi le couple de rappel $\Gamma_s$ du volant de direction du véhicule est-il déterminé ici en fonction notamment de :

- la vitesse v du véhicule automobile, c'est-à-dire de la vitesse à laquelle ce dernier avance, et de
- la position angulaire effective $\delta_d$ du volant de direction.

Le couple de rappel $\Gamma_s$ du volant de direction du véhicule peut être déterminé en outre en fonction de la vitesse de lacet de ce véhicule.

Cette vitesse de lacet correspond à la vitesse angulaire du véhicule par rapport à un axe perpendiculaire au plan tangent à la portion de route sur laquelle il circule, par exemple par rapport à un axe vertical lorsque cette portion de route est horizontale.

Cette vitesse de lacet est déterminée par exemple en fonction de la position angulaire effective $\delta_d$ du volant de direction et de la vitesse v du véhicule automobile.

Les premier et deuxième angles $\theta_{far}$, $\theta_{near}$ sont déterminés chacun en fonction d'au moins une donnée relative à un environnement dans lequel évolue le véhicule automobile.

Ce premier angle $\theta_{far}$ et l'angle $\theta_{prox}$ formé entre le véhicule automobile et la portion de la route proche du véhicule automobile sont déterminés ici par analyse d'au moins une image de cet environnement acquise au moyen d'une caméra embarquée dans le véhicule automobile. Cette caméra est ici disposée pour pouvoir obtenir des images de l'environnement faisant face au véhicule automobile, c'est-à-dire situé devant lui, dans le sens de marche avant du véhicule.

L'analyse de cette image permet également de déterminer un écart latéral entre le véhicule automobile et l'un des bords de cette portion de la route proche du véhicule automobile, par exemple le bord droit de cette portion de route qui la sépare de son bas-côté droit.

Le deuxième angle $\theta_{near}$ est déterminé ici en fonction en outre de cet écart latéral. On prend par exemple : $\theta_{near} = \Psi_L + y_L/l_s$, où $\Psi_L$ est l'angle de cap relatif (entre le cap véhicule et le cap route), $y_L$ est l'écart latéral du véhicule par rapport au centre de la voie et $l_s$ une distance proche devant le véhicule (par exemple $l_s = 5$ m).

La détermination du vecteur de sortie Y du modèle mathématique, dont on rappelle qu'il est représentatif du comportement neuromusculaire du conducteur, est réalisée ici par:

- une détermination de la position angulaire cible $\hat{\delta}_{SW}$ dans laquelle le conducteur devrait placer ce volant si son niveau d'attention était élevé, correspondant sur la figure 2 au bloc DVI, suivie par

- une détermination du couple cible $\hat{\Gamma}_d$ que le conducteur devrait exercer sur le volant de direction si son niveau d'attention était élevé, correspondant sur la figure 2 au bloc RN.

La détermination de cette position angulaire cible $\hat{\delta}_{SW}$ est réalisée en fonction notamment du premier angle $\theta_{far}$ mentionné ci-dessus, de manière à prendre en compte la tendance du conducteur à positionner son volant en fonction de la direction de la route loin devant le véhicule pour anticiper un changement de direction de cette route.

Ici, plus précisément, cette position angulaire cible $\hat{\delta}_{SW}$ est déterminée en fonction du produit de ce premier angle $\theta_{far}$, multiplié par un gain d'anticipation visuelle $K_p$ (bloc ANT sur la figure 2).

La détermination de cette position angulaire cible $\hat{\delta}_{SW}$ est réalisée également en fonction du deuxième angle $\theta_{near}$ décrit ci-dessus (bloc COMP sur la figure 2), de manière à traduire le fait que le conducteur positionne aussi le volant de direction du véhicule de manière à :

- corriger l'erreur de cap, c'est-à-dire de manière à annuler l'angle $\theta_{prox}$ formé entre le véhicule et ladite portion de la route proche du véhicule automobile, et à
- corriger l'écart latéral entre le véhicule automobile et l'un des bords de cette portion de route proche du véhicule.

Ce deuxième angle $\theta_{near}$ influe ici d'autant plus sur la valeur de ladite position angulaire cible $\hat{\delta}_{SW}$ que la vitesse v du véhicule est petite.

Cette disposition permet de modéliser le fait que le conducteur prend fortement en compte cette erreur de cap lorsque la vitesse v du véhicule est petite, tandis qu'à vitesse élevée, par exemple sur autoroute, il concentre principalement son attention sur la direction de la route loin devant le véhicule, et privilégie une anticipation de la direction future de la route (bloc ANT, figure 2) par rapport à une prise en compte de la direction de cette route au voisinage du véhicule (bloc COMP, figure 2).

Plus précisément, ladite position angulaire cible $\hat{\delta}_{SW}$ est déterminée en fonction du produit dudit deuxième angle $\theta_{near}$, multiplié par un gain de compensation $K_c$ et divisé par la vitesse v du véhicule.

Par ailleurs, l'évolution temporelle de ce deuxième angle $\theta_{near}$ est filtrée ici par un filtre passe-bas favorisant des composantes de basse fréquence. Ce filtre passe-bas est un filtre du premier ordre, dont la fonction de transfert en représentation de Laplace est :

$$\frac{1}{1 + s\,T_I} \qquad (F1)$$

où s est la variable de Laplace, et $T_I$ est une constante de temps caractéristique de ce filtre passe-bas, dite constante de temps de compensation.

En variante, l'évolution temporelle du deuxième angle $\theta_{near}$ pourrait être filtrée par un autre type de filtre, par exemple par un filtre passe-bas du deuxième ordre.

D'autre part, pour prendre en compte le temps que mettrait le conducteur du véhicule pour estimer cette position angulaire cible $\delta_{SW}$, l'évolution temporelle de cette dernière est retardée d'une certaine durée (bloc RET sur la figure 2) désignée ci-dessous comme le retard au diagnostic visuel $\tau_p$ du conducteur.

Plus précisément, la somme des contributions des premier et deuxième angles est retardée par un filtre dont la fonction de transfert en représentation de Laplace est :

$$\exp\left(-s\,\tau_p\right) \qquad (F2).$$

Finalement, la position angulaire cible $\hat{\delta}_{SW}$ dans laquelle le conducteur devrait placer ce volant si son niveau d'attention était élevé est déterminée ici, en représentation de Laplace, conformément à la formule F3 suivante :

$$\hat{\delta}_{SW} = \exp\left(-s\,\tau_p\right)\left(K_p\,\theta_{far} + \frac{1}{1 + s\,T_I}\,\frac{K_c}{v}\,\theta_{near}\right) \qquad (F3)$$

Une fois cette position angulaire cible $\hat{\delta}_{SW}$ déterminée, le modèle mathématique permet de déterminer le couple cible $\hat{\Gamma}_d$ que le conducteur devrait exercer sur le volant de direction si son niveau d'attention était élevé, et cela en tenant compte d'un temps de réaction neuromusculaire Tn et de la raideur de conduite du conducteur.

Plus particulièrement, ce couple cible $\hat{\Gamma}_d$ est déterminé, au sein du bloc RN mentionné précédemment, en fonction d'un couple de réaction du conducteur $\Gamma_R$, égal ici au produit de :

- la différence $\hat{\delta}_{SW} - \delta_d$ entre la position angulaire cible $\hat{\delta}_{SW}$ dans laquelle le volant de direction devrait être placé si le niveau d'attention du conducteur était élevé et la position effective $\delta_d$ de ce volant, multipliée par
- une constante de raideur neuromusculaire $K_t$ du conducteur (bloc REA, figure 2).

Cette constante de raideur neuromusculaire $K_t$ est représentative de la raideur de conduite du conducteur. Cette constante de raideur neuromusculaire $K_t$ est plus grande pour une conduite très réactive, pour laquelle le conducteur corrige la position angulaire du volant en exerçant sur celui-ci un couple important, que pour une conduite souple, pour laquelle le conducteur corrige progressivement cette position angulaire en exerçant un couple modéré sur le volant.

Le temps de réaction neuromusculaire Tn du conducteur est représentatif d'un temps que mettrait le conducteur pour traduire son intention de positionner le volant à ladite position angulaire cible $\delta_{SW}$, sous forme d'une action mécanique, en l'occurrence d'un couple, exercée sur ce volant.

Pour prendre en compte ce temps de réaction neuromusculaire Tn du conducteur, la détermination de ce couple cible $\hat{\Gamma}_d$ comprend ici une étape finale de filtrage passe-bas (bloc REN, figure 2), au moyen d'un filtre passe-bas du premier ordre dont la fonction de transfert en représentation de Laplace est :

$$\frac{1}{1 + s\,Tn} \qquad (F4)$$

En variante, un filtre d'un autre type, par exemple du deuxième ordre, peut être utilisé à cette fin. Cette étape de filtrage pourrait également être réalisée en début, ou à un stade intermédiaire, de la détermination de ce couple cible $\hat{\Gamma}_d$, plutôt qu'à la fin de cette détermination.

Comme il est d'autant plus difficile d'écarter le volant de direction de sa position de repos que la vitesse v du véhicule est élevée, le couple cible $\hat{\Gamma}_d$ que le conducteur devrait exercer sur le volant de direction si son niveau d'attention était élevé est déterminé par ailleurs en fonction d'un couple de raideur de la direction du véhicule $\Gamma_C$, d'autant plus grand que cette vitesse v est élevée.

Ce couple de raideur de la direction du véhicule $\Gamma_C$ est déterminé également en fonction de ladite position angulaire cible $\hat{\delta}_{SW}$. Plus précisément, il est égal au produit de la vitesse v du véhicule, multipliée par cette position angulaire cible $\hat{\delta}_{SW}$ et par une constante de raideur de la direction $K_r$ (bloc COL, figure 2).

Ici, le couple cible $\hat{\Gamma}_d$ est déterminé par ailleurs en fonction de la différence entre le couple de réaction du conducteur $\Gamma_C$ et le couple de rappel $\Gamma_s$ du volant de direction. Cela permet notamment de prendre en compte que le conducteur du véhicule n'exercerait pas de couple sur ce volant de direction dans un cas où le volant aurait tendance spontanément, sous l'effet de ce couple de rappel $\Gamma_s$, à adopter une position angulaire proche de la position angulaire cible $\hat{\delta}_{SW}$.

Finalement, le couple cible $\hat{\Gamma}_d$ que le conducteur devrait exercer sur le volant de direction si son niveau d'attention était élevé est déterminé ici, en représentation de Laplace, conformément à la formule F5 suivante :

$$\hat{\Gamma}_d = \frac{1}{1 + s\,Tn}\left(K_t\left[\hat{\delta}_{SW} - \delta_d\right] + K_r v\,\hat{\delta}_{SW} - \Gamma_s\right) \qquad (F5)$$

Les paramètres de ce modèle mathématique représentatif du comportement neuromusculaire du conducteur comprennent donc le gain d'anticipation $K_p$, le gain de compensation $K_c$, la constante de temps de compensation $T_l$, le retard au diagnostic visuel $\tau_p$ du conducteur, la constante de raideur neuromusculaire $K_t$ du conducteur, la constante de raideur de la direction $K_r$, et le temps de réaction neuromusculaire Tn du conducteur.

Ces paramètres sont rassemblés sous la forme du vecteur de paramètres $\Pi$ suivant :

$$\Pi = \left[K_p, \ K_c, \ T_l, \tau_p, K_t, K_r, Tn\right]^T \qquad (F6)$$

Chacun de ces paramètres est identifié, c'est-à-dire qu'une valeur de ce paramètre est déterminée, au cours de la phase d'identification PHI (figure 1) mentionnée ci-dessus.

Cette phase d'identification PHI correspond ici à une phase d'apprentissage réalisée en début de phase de roulage. Cette phase d'identification est par exemple réalisée à nouveau à chaque fois qu'un conducteur prend place dans le véhicule et commence à le conduire (on estime en effet qu'à ce moment, l'attention du conducteur est maximale).

La phase d'identification PHI comprend l'acquisition ACQ, à une pluralité d'instants successifs, d'une pluralité correspondante de valeurs de la position angulaire effective $\delta_d$ de ce volant de direction, de valeurs d'un couple effectivement exercé $\Gamma_d$ par le conducteur sur le volant de direction du véhicule, de valeurs de la vitesse v du véhicule, et d'images de l'environnement dans lequel évolue le véhicule.

Cette acquisition ACQ est réalisée ici pendant une durée prédéterminée, typiquement inférieure à une minute.

Les valeurs de ce couple effectivement exercé $\Gamma_d$ sont acquises au moyen d'un capteur équipant le volant ou la colonne de direction du véhicule.

Des valeurs successives du vecteur d'entrée U du modèle mathématique qui est représentatif du comportement neuromusculaire du conducteur sont alors déterminées, sur la base notamment de ces images et de ces valeurs acquises de la position angulaire effective $\delta_d$ du volant de direction et de la vitesse v du véhicule.

L'identification ID des paramètres de ce modèle mathématique, en l'occurrence ici l'identification du vecteur de paramètres $\Pi$, est basée sur une comparaison entre :

- les valeurs acquises de la position angulaire effective $\delta_d$ du volant de direction et du couple effectivement exercé $\Gamma_d$ sur ce dernier, et
- des valeurs de la position angulaire cible $\hat{\delta}_{SW}$ et du couple cible $\hat{\Gamma}_d$ qui serait exercé sur ce volant, déterminées au moyen dudit modèle mathématique, en fonction desdites valeurs de son vecteur d'entrée U.

Cette identification ID est réalisée par exemple par une méthode basée sur la théorie statistique de l'estimation, telle qu'une méthode dite à prédiction d'erreur (ou PEM, selon l'acronyme anglo-saxon de « Prediction Error Method »).

En variante, cette identification peut par exemple être réalisée par une méthode dite des moindres carrés d'innovation (MCI), telle qu'une méthode basée sur un filtre de Kalmann étendu.

Selon une autre variante, la phase d'identification PHI des paramètres du modèle mathématique qui est représentatif du comportement neuromusculaire du conducteur peut être réalisée à plusieurs reprises, tout au long d'une phase de roulage, au lieu d'être réalisée en début de cette phase de roulage.

Ici, les paramètres ainsi identifiés du modèle mathématique qui est représentatif du comportement neuromusculaire du conducteur sont ensuite utilisés lors de la phase de diagnostic PHD au cours de laquelle on détermine un niveau d'attention du conducteur (figure 1).

Selon une caractéristique remarquable du procédé de détermination d'un niveau d'attention du conducteur selon l'invention, cette phase de diagnostic PHD comprend les étapes suivantes :

a) le calculateur acquiert une position effective d'un organe de pilotage du véhicule automobile,

b) le calculateur acquiert au moins une donnée relative à un environnement dans lequel évolue ledit véhicule automobile,

c1) le calculateur détermine, en fonction de ladite donnée relative à l'environnement dans lequel évolue le véhicule automobile, une position cible dans laquelle l'organe de pilotage devrait être placé si le niveau d'attention du conducteur était élevé,

c2) le calculateur détermine une grandeur de rappel de l'organe de pilotage vers une position de repos, en fonction au moins de la position effective de cet organe de pilotage,

c3) le calculateur détermine une grandeur cible, représentative d'une action que le conducteur devrait effectuer sur ledit organe de pilotage si le niveau d'attention du conducteur était élevé, en fonction de la position cible, de la position effective de l'organe de pilotage du véhicule, et de ladite grandeur de rappel de l'organe de pilotage,

d) le calculateur acquiert une grandeur effective représentative d'une action de commande du conducteur sur ledit organe de pilotage,

e) le calculateur compare ladite grandeur effective et ladite grandeur cible, et

f) le calculateur détermine ledit niveau d'attention en fonction du résultat de la comparaison réalisée à l'étape e).

Plus précisément, ici, lesdites positions et grandeurs cibles $\hat{\delta}_{SW}$, $\Gamma_d$, déterminées respectivement aux étapes c1) et c3), sont déterminées au moyen du modèle mathématique qui est représentatif du comportement neuromusculaire du conducteur, décrit ci-dessus.

Pendant cette phase de diagnostic PHD, les valeurs des coordonnées du vecteur de paramètres $\Pi$ restent fixées et égales à celles déterminées précédemment lors de la phase d'identification PHI.

Le calculateur détermine à chaque instant les valeurs des coordonnées du vecteur d'entrée U dudit modèle mathématique (étapes a), b), et c2)), de la même manière que lors de la phase d'identification PHI décrite ci-dessus.

On en déduit à chaque instant les valeurs des coordonnées du vecteur de sortie Y de ce modèle mathématique, en particulier la valeur $\hat{\Gamma}_d(k)$ du couple cible $\hat{\Gamma}_d$ que le conducteur devrait exercer sur le volant de direction du véhicule si son niveau d'attention était élevé (étapes c1) et c3)).

Les différents instants pour lesquels on calcule la valeur $\hat{\Gamma}_d(k)$ de ce couple cible $\hat{\Gamma}_d$ sont ici régulièrement séparés par un pas de temps $\Delta t$, et sont repérés par leur indice k.

Le calculateur acquiert par ailleurs, à chacun de ces instants, la valeur $\Gamma_d(k)$ du couple effectivement exercé $\Gamma_d$ par le conducteur sur le volant de direction du véhicule, au cours de l'étape d).

A l'étape e), le calculateur compare, à chacun de ces instants, les valeurs $\Gamma_d(k)$ et $\hat{\Gamma}_d(k)$ correspondantes, respectivement du couple effectivement exercé $\Gamma_d$ par le conducteur sur le volant de direction du véhicule, et du couple cible $\hat{\Gamma}_d$ que le conducteur devrait exercer sur le volant de direction si son niveau d'attention était élevé. Plus précisément, ici, le calculateur calcule une différence TPE(k) entre ce couple effectivement exercé $\Gamma_d$ et ce couple cible $\hat{\Gamma}_d$ :

$$TPE(k) = \Gamma_d(k) - \hat{\Gamma}_d(k) \qquad (F7)$$

Au cours de l'étape f) suivante, le calculateur détermine le niveau d'attention du conducteur en fonction notamment de cette différence TPE(k).

Plus précisément, au cours de l'étape f) :

- le calculateur sélectionne les différences TPE(j) calculées à chaque exécution de l'étape e), pendant un premier intervalle temporel,
- le calculateur calcule une première valeur efficace VEc(k) des différences TPE(j) sélectionnées, et
- le calculateur déduit le niveau d'attention du conducteur en fonction de ladite première valeur efficace VEc(k).

De plus, ici, au cours de l'étape f),

- le calculateur sélectionne les différences TPE(j) calculées à chaque exécution de l'étape e), pendant un second intervalle temporel plus long que le premier intervalle temporel,
- le calculateur calcule une seconde valeur efficace $VE_L(k)$ des différences TPE(j) sélectionnées, et
- le calculateur déduit le niveau d'attention du conducteur en fonction en outre de ladite seconde valeur efficace $VE_L(k)$.

Une constatation, faisant partie de la présente invention, est qu'une détermination d'un niveau d'attention du conducteur basée, comme c'est le cas ici, sur ces première et seconde valeurs efficaces VEc(k), $VE_L(k)$ est particulièrement efficace et fiable.

Ici, le premier intervalle temporel correspond à une fenêtre temporelle glissante, de durée courte, s'étendant depuis un instant antérieur jusqu'à l'instant, d'indice k, pour lequel est calculée cette première efficace VEc(k).

Plus précisément, ce premier intervalle comprend un nombre Nc desdits instants, et sa durée est égale à Nc. $\Delta t$. Cette durée est typiquement comprise entre 0,5 et 20 secondes. Ici, par exemple, elle est égale à 15 secondes.

La première valeur efficace VEc(k) est ainsi calculée conformément à la formule F8 suivante :

$$VE_C(k) = \sqrt{\frac{1}{Nc\,\Delta t} \sum_{j=k-Nc+1}^{k} TPE^2(j)} \qquad (F8)$$

Ici, le second intervalle temporel correspond aussi à une fenêtre temporelle glissante, mais de durée plus longue que celle du premier intervalle temporelle. Cette fenêtre temporelle glissante s'étend là encore depuis un instant antérieur jusqu'à l'instant, d'indice k, pour lequel est calculée la seconde valeur efficace $VE_L(k)$.

Plus précisément, ce second intervalle comprend un nombre $N_L$ desdits instants, et sa durée est égale à $N_L$. $\Delta t$. Cette durée est typiquement comprise entre 20 et 300 secondes. Ici, par exemple, elle est égale à 30 secondes.

La seconde valeur efficace $VE_L(k)$ est ainsi calculée conformément à la formule F9 suivante :

$$VE_L(k) = \sqrt{\frac{1}{N_L\,\Delta t} \sum_{j=k-N_L+1}^{k} TPE^2(j)} \qquad (F9)$$

Les première et seconde valeurs efficaces VEc(k), $VE_L(k)$ sont calculées ici lors d'une première sous-étape CI de l'étape f) (voir figure 1).

Par ailleurs, au cours de cette sous-étape CI, la différence TPE(k) et/ou les première et seconde valeurs efficaces VEc(k), $VE_L(k)$ ainsi calculées sont enregistrées dans la mémoire vive MEM (voir figure 1), ce qui permettra au besoin de recalculer ultérieurement ces valeurs efficaces.

Au cours de cette sous-étape CI, le calculateur calcule également une valeur $VE_R(k)$ d'un indicateur $VE_R$, en fonction des première et seconde valeurs efficaces VEc(k), VE$_L$(k).

La valeur VE$_R$(k) de cet indicateur VE$_R$ est ici égale au logarithme népérien ln du rapport de cette première valeur efficace VEc(k) divisée par cette seconde valeur efficace VE$_L$(k) :

$$\mathrm{VE_R(k) = ln(VE_C(k)/VE_L(k))} \qquad (F10)$$

Cet indicateur VE$_R$ peut présenter des variations rapides au cours du temps correspondant à des effets parasites. Aussi, pour rendre la détermination du niveau d'attention du conducteur plus robuste, l'évolution temporelle de cet indicateur VE$_R$ est filtrée au moyen d'un filtre (ici un filtre passe-bas) pour obtenir un indicateur filtré IDF1. Ce filtrage est réalisé lors de la sous-étape suivante FI1, au cours de laquelle une valeur IDF1(k) de cet indicateur filtrée IDF1 est calculée.

Le filtre passe-bas utilisé pour cela est ici un filtre passe-bas d'ordre un, dont la fonction de transfert en représentation de Laplace est :

$$\frac{1}{1 + s\,\mathrm{T_{IND}}} \qquad (F11)$$

La constante de temps T$_{IND}$ de ce filtre passe-bas est préférentiellement inférieure à la durée du premier intervalle temporel. Ici, par exemple, cette constante de temps T$_{IND}$ est égale à 1 seconde.

Lors de la sous-étape suivante DNA, on détermine un niveau d'attention du conducteur en comparant cette valeur IDF1(k) de l'indicateur filtrée IDF1 à un seuil de détection a prédéterminé.

Lorsque cette valeur IDF1(k) est inférieure au seuil de détection a, on détermine que le conducteur est attentif. Une première valeur est alors attribuée à une variable « flag1 » représentative du niveau d'attention du conducteur. Ici, par exemple, cette première valeur est égale à 0.

Au contraire, lorsque cette valeur IDF1(k) est supérieure au seuil de détection a, on détermine que le conducteur est distrait ou dans un état de fatigue. Une deuxième valeur, différente de la première est alors attribuée à ladite variable « flag1 ». Ici, par exemple, cette deuxième valeur est égale à 1.

Ici on détermine donc :

- soit un niveau d'attention correspondant au fait que le conducteur est attentif,
- soit un autre niveau d'attention correspondant au fait que le conducteur est distrait ou dans un état de fatigue.

La valeur du seuil de détection a prédéterminée peut par exemple être ajustée, à l'issu d'essais de conduite, pour permettre en pratique une discrimination efficace entre ces deux niveaux d'attention. Préférentiellement, la valeur du seuil de détection a prédéterminé est comprise entre ln(1) et ln(100). Ici, par exemple, elle est égale à ln(1,5).

En variante, plus de deux niveaux d'attention différents du conducteur peuvent être déterminés, au cours du procédé de détermination du niveau d'attention du conducteur. A titre d'exemple, on pourrait considérer que l'attention du conducteur varie entre un état attentif, un état peu attentif, et un état distrait. Dans cette variante, l'alerte émise pour rétablir l'attention du conducteur pourra être ajustée en fonction de ce niveau d'attention.

Dans le mode de réalisation de la méthode de stimulation de l'attention d'un conducteur d'un véhicule automobile illustré sur la figure 1, le seuil d'attention prédéterminé, en dessous duquel le calculateur déclenche le signal d'avertissement à destination du conducteur (étape STIM, figure 1), correspond au fait que le conducteur est attentif.

Dès que le calculateur détermine que le conducteur est distrait ou dans un état de fatigue, il déclenche ce signal d'avertissement.

Ce dernier peut correspondre par exemple à un signal sonore ou lumineux signalant au conducteur qu'il n'est pas attentif. Ce signal d'avertissement peut aussi lui être transmis sous forme mécanique, par exemple sous forme d'une vibration du fauteuil sur lequel il est assis, ou d'une vibration du volant de direction du véhicule.

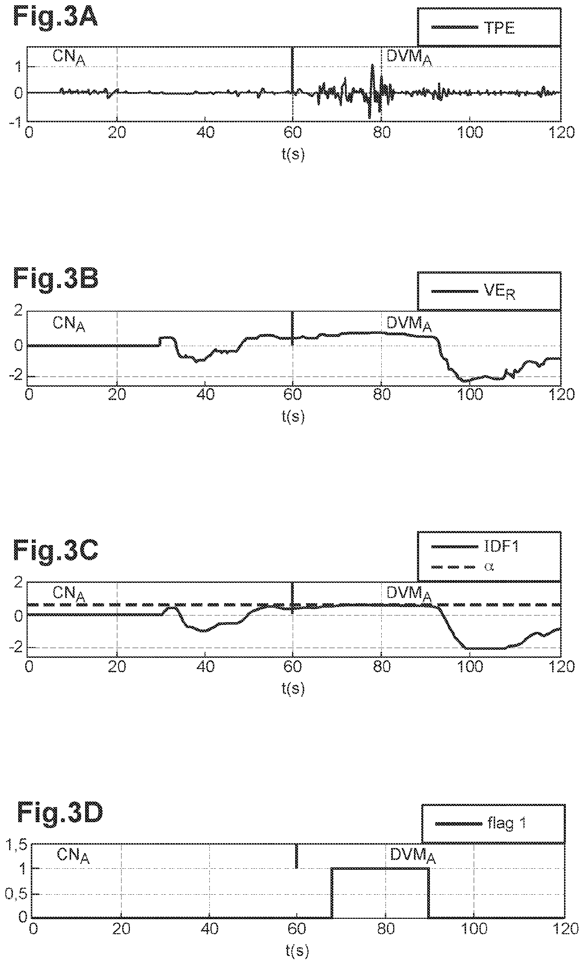

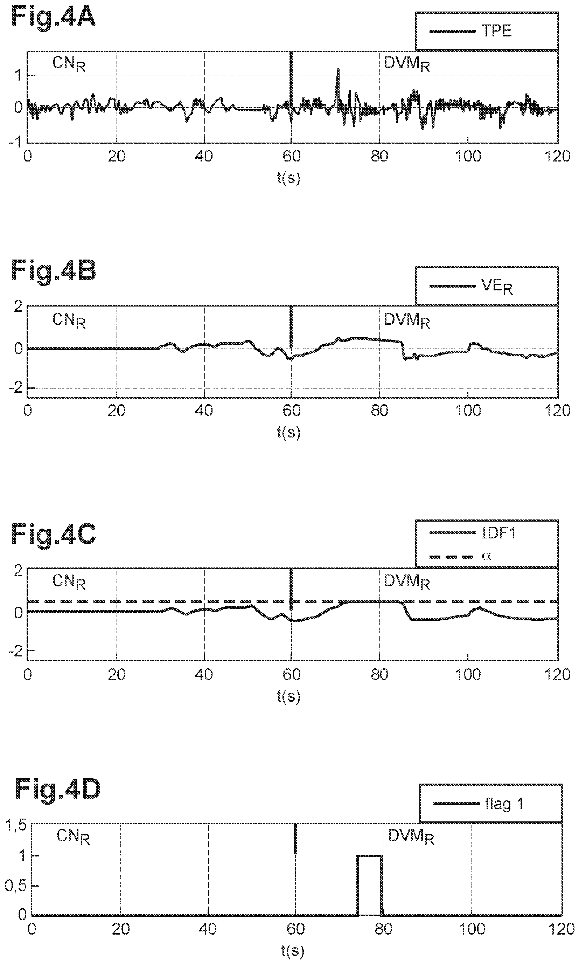

Sur les figures 3A à 3D et 4A à 4D, on a représenté l'évolution au cours du temps t de différentes grandeurs évaluées conformément au procédé de détermination décrit ci-dessus, pour des essais de conduite réalisés par un conducteur sur un simulateur de conduite. Ce conducteur est un conducteur réel, c'est-à-dire un individu. Dans le cas des figures 3A à 3D, l'essai réalisé correspond à un trajet sur une route peu sinueuse, par exemple sur autoroute (plutôt rectiligne, sur laquelle le véhicule roule à environ 130 km/h), tandis que dans le cas des figures 4A à 4D il correspond à un trajet sur une route sinueuse, par exemple une route à deux voies de circulation en sens opposés (sur laquelle le véhicule roule à environ 90 km/h).

Pour chacun de ces deux essais, pendant une première partie CN$_A$, CN$_R$ de l'essai, des instants t=0 à t=60 secondes, le conducteur est attentif. Pendant une deuxième partie DVM$_A$, DVM$_R$ de l'essai, des instants t=60 secondes à t=120 secondes, le conducteur est distrait ou dans un état de fatigue.

Sur les figures 3A à 3D comme sur les figures 4A à 4D, on a respectivement représenté, en fonction du temps t, indiqué en secondes :

- la différence TPE(k) entre le couple effectivement exercé $\Gamma_d$ par le conducteur sur le volant de direction et le couple cible $\hat{\Gamma}_d$ qu'il devrait exercer sur celui-ci si son niveau d'attention était élevé (figures 3A et 4A),
- la valeur $VE_R(k)$ de l'indicateur $VE_R$ obtenu à partir de cette différence TPE(k) (figures 3B et 4B),
- la valeur IDF1(k) de l'indicateur filtré IDF1 correspondant et la valeur, constante, du seuil de détection a prédéterminé (figures 3C et 4C), et
- la valeur de la variable « flag1 » représentative du niveau d'attention du conducteur (figures 3D et 4D).

On constate sur les figures 3A et 4A que cette différence TPE(k) présente des variations temporelles plus grandes lorsque le conducteur est distrait ou dans un état de fatigue (deuxièmes parties $DVM_A$, $DVM_R$ de ces essais) que lorsqu'il est attentif (premières parties $CN_A$, $CN_R$ de ces essais), et cela aussi bien pour une conduite sur une route peu sinueuse que sur une route sinueuse. On constate également que, lorsque le conducteur est attentif, ces variations sont plus importantes pour une conduite sur une route sinueuse que sur une route peu sinueuse.

On constate également sur les figures 3D et 4D, aussi bien pour l'essai de conduite sur route peu sinueuse que pour l'essai de conduite sur route sinueuse que, lorsque le conducteur est attentif, ce procédé permet effectivement de déterminer que le conducteur est attentif. En effet, pendant les premières parties $CN_A$, $CN_R$ de ces essais, la valeur de la variable « flag1 » est égale à 0.

On constate également que, aussi bien pour l'essai de conduite sur route peu sinueuse que pour l'essai de conduite sur route sinueuse, lorsque le conducteur est distrait ou dans un état de fatigue, ce procédé permet effectivement de déterminer, au moins de manière transitoire, que le conducteur est distrait ou dans un état de fatigue. En effet, pendant les deuxièmes parties $DVM_A$, $DVM_R$ de ces essais, la valeur de la variable « flag1 » est égale à 1 pendant au moins une partie de la période pendant laquelle le conducteur est distrait ou dans un état de fatigue.

Ces essais illustrent une propriété particulièrement intéressante du procédé de détermination d'un niveau d'attention d'un conducteur d'un véhicule automobile selon l'invention, qui est que cette détermination est fiable aussi bien pour une conduite sur une route peu sinueuse, par exemple sur autoroute, que pour une conduite sur une route sinueuse, par exemple sur une route de montagne.

## Revendications

1. Procédé de détermination d'un niveau d'attention d'un conducteur d'un véhicule automobile, comprenant les étapes suivantes, l'exécution de l'ensemble des étapes a) à e) étant répétée en continu:

   a) on acquiert une position effective ($\delta_d$) d'un organe de pilotage du véhicule automobile,
   b) on acquiert au moins une donnée relative à un environnement dans lequel évolue ledit véhicule automobile,
   c1) on détermine, en fonction de ladite donnée relative à l'environnement dans lequel évolue le véhicule automobile, une position cible ($\hat{\delta}_{SW}$) dans laquelle l'organe de pilotage devrait être placé si le niveau d'attention du conducteur était élevé,
   c2) on détermine une grandeur de rappel ($\Gamma_s$) de l'organe de pilotage vers une position de repos, en fonction au moins de la position effective ($\delta_d$) de cet organe de pilotage,
   c3) on détermine une grandeur cible ($\hat{\Gamma}_d$), représentative d'une action que le conducteur devrait effectuer sur ledit organe de pilotage si le niveau d'attention du conducteur était élevé, en fonction de la position cible ($\hat{\delta}_{SW}$), de la position effective ($\delta_d$) de l'organe de pilotage du véhicule, et de ladite grandeur de rappel ($\Gamma_s$) de l'organe de pilotage,
   d) on acquiert une grandeur effective ($\Gamma_d$) représentative d'une action de commande du conducteur sur ledit organe de pilotage,
   e) on compare ladite grandeur effective ($\Gamma_d$) et ladite grandeur cible ($\hat{\Gamma}_d$) en calculant une différence (TPE(k)) entre ladite grandeur effective ($\Gamma_d$) et ladite grandeur cible ($\hat{\Gamma}_d$),
   f) on détermine ledit niveau d'attention en fonction du résultat de la comparaison réalisée à l'étape e) en sélectionnant les différences (TPE(j)) calculées pendant un premier intervalle temporel, en calculant une première valeur efficace ($VE_C(k)$) des différences (TPE(j)) sélectionnées, de manière à déduire ledit niveau d'attention du conducteur du véhicule automobile en fonction de ladite première valeur efficace (VEc(k)),
   **caractérisé en ce qu'**à l'étape f), on sélectionne les différences (TPE(j)) calculées pendant un second intervalle temporel plus long que le premier intervalle temporel, on calcule une seconde valeur efficace ($VE_L(k)$) des différences (TPE(j)) sélectionnées, et on déduit ledit niveau d'attention du conducteur du véhicule automobile en fonction de ladite seconde valeur efficace (VE$_L$(k)).

2. Procédé selon la revendication précédente, dans lequel ladite position cible ($\hat{\delta}_{SW}$) est déterminée, à l'étape c1), en fonction :

- d'un premier angle ($\theta_{far}$), formé entre le véhicule automobile et une portion de la route sur laquelle circule ledit véhicule automobile, éloignée du véhicule automobile, et
- d'un deuxième angle ($\theta_{near}$), fonction d'un angle ($\theta_{prox}$) formé entre le véhicule automobile et une autre portion de ladite route, proche du véhicule automobile,

lesdits premier ($\theta_{far}$) et deuxième angles ($\theta_{near}$) étant déterminés en fonction de ladite donnée relative à l'environnement dans lequel évolue le véhicule automobile.

3. Procédé selon la revendication précédente, dans lequel, à l'étape c1), ledit deuxième angle ($\theta_{near}$) influe d'autant plus sur la valeur de ladite position cible ($\hat{\delta}_{SW}$) que la vitesse (v) du véhicule est petite.

4. Procédé selon l'une des revendications précédentes, dans lequel on détermine ladite grandeur cible ($\hat{\Gamma}_d$), à l'étape c3), au moyen d'un modèle mathématique qui est représentatif du comportement neuromusculaire du conducteur et qui tient compte de son temps de réaction neuromusculaire (Tn) et/ou de sa raideur de conduite.

5. Procédé selon la revendication précédente, dans lequel le temps de réaction neuromusculaire (Tn) et/ou la raideur de conduite du conducteur sont déterminés lors d'une étape d'identification réalisée antérieurement aux étapes a) à f), en fonction de plusieurs acquisitions successives de la position effective ($\delta_d$) de l'organe de pilotage du véhicule, de la donnée relative à l'environnement dans lequel évolue le véhicule automobile, et de la grandeur effective ($\Gamma_d$) représentative d'une action de commande du conducteur sur ledit organe de pilotage.

6. Procédé selon l'une des revendications précédentes dans lequel on détermine ladite grandeur cible ($\hat{\Gamma}_d$), à l'étape c3), en fonction de plusieurs acquisitions successives de la position effective ($\delta_d$) de l'organe de pilotage du véhicule et/ou en fonction de plusieurs acquisitions successives de la donnée relative à l'environnement dans lequel évolue le véhicule automobile.

7. Procédé selon l'une des revendications précédentes, dans lequel ladite position de l'organe de pilotage du véhicule automobile est la position angulaire d'un volant de direction de ce véhicule automobile.

8. Procédé selon l'une des revendications précédentes, dans lequel :

- ladite grandeur cible ($\hat{\Gamma}_d$) est un couple cible ($\hat{\Gamma}_d$) que le conducteur devrait exercer sur le volant de direction du véhicule si son niveau d'attention était élevé, et
- ladite grandeur effective ($\Gamma_d$) est le couple effectivement exercé ($\Gamma_d$) par le conducteur sur le volant de direction du véhicule.

9. Méthode de stimulation de l'attention d'un conducteur d'un véhicule automobile, au cours de laquelle :

- on détermine un niveau d'attention du conducteur du véhicule par l'exécution d'un procédé conforme à l'une des revendications précédentes, et
- on déclenche un signal d'avertissement à destination du conducteur, lorsque le niveau d'attention précédemment déterminé est inférieur à un seuil d'attention prédéterminé.

**Patentansprüche**

1. Verfahren zur Bestimmung eines Aufmerksamkeitsgrades eines Fahrers eines Kraftfahrzeugs, das die folgenden Schritte beinhaltet, wobei die Ausführung sämtlicher Schritte a) bis e) kontinuierlich wiederholt wird:

a) Erfassen einer tatsächlichen Position ($\delta_d$) eines Steuerelements des Kraftfahrzeugs,
b) Erfassen mindestens eines Datenelements bezüglich einer Umgebung, in der sich das Kraftfahrzeug fortbewegt, c1) Bestimmen, in Abhängigkeit von dem Datenelement bezüglich der Umgebung, in der sich das Kraftfahrzeug fortbewegt, einer Zielposition ($\hat{\delta}_{SW}$), in die das Steuerelement gebracht werden sollte, wenn der Aufmerksamkeitsgrad des Fahrers hoch wäre,

c2) Bestimmen einer Größe zum Zurückstellen ($\Gamma_s$) des Steuerelements in Richtung einer Ruheposition mindestens in Abhängigkeit von der tatsächlichen Position ($\delta_d$) dieses Steuerelements,

c3) Bestimmen einer Zielgröße ($\hat{\Gamma}_d$), die für einen Vorgang, den der Fahrer an dem Steuerelement vornehmen sollte, wenn der Aufmerksamkeitsgrad des Fahrers hoch wäre, repräsentativ ist, in Abhängigkeit von der Zielposition ($\hat{\delta}_{SW}$), der tatsächlichen Position ($\delta_d$) des Steuerelements des Fahrzeugs und der Rückstellgröße ($\Gamma_s$) des Steuerelements,

d) Erfassen einer tatsächlichen Größe ($\Gamma_d$), die für einen Bedienvorgang des Fahrers an dem Steuerelement repräsentativ ist,

e) Vergleichen der tatsächlichen Größe ($\Gamma_d$) und der Zielgröße ($\hat{\Gamma}_d$), indem eine Differenz (TPE(k)) zwischen der tatsächlichen Größe ($\Gamma_d$) und der Zielgröße ($\hat{\Gamma}_d$) berechnet wird,

f) Bestimmen des Aufmerksamkeitsgrades in Abhängigkeit von dem Ergebnis des in Schritt e) durchgeführten Vergleichs, indem die Differenzen (TPE(j)), die während eines ersten Zeitintervalls berechnet werden, ausgewählt werden, indem ein erster Effektivwert ($VE_C$(k)) der ausgewählten Differenzen (TPE(j)) berechnet wird, um den Aufmerksamkeitsgrad des Fahrers des Kraftfahrzeugs in Abhängigkeit von dem ersten Effektivwert ($VE_C$(k)) abzuleiten,

**dadurch gekennzeichnet, dass** in Schritt f) die Differenzen (TPE(j)), die während eines zweiten Zeitintervalls, das länger als das erste Zeitintervall ist, berechnet werden, ausgewählt werden, ein zweiter Effektivwert ($VE_L$(k)) der ausgewählten Differenzen (TPE(j)) berechnet wird und der Aufmerksamkeitsgrad des Fahrers des Kraftfahrzeugs in Abhängigkeit von dem zweiten Effektivwert ($VE_L$(k)) abgeleitet wird.

2. Verfahren nach dem vorhergehenden Anspruch, wobei die Zielposition ($\hat{\delta}_{SW}$) in Schritt c1) in Abhängigkeit von Folgendem bestimmt wird:

- einem ersten Winkel ($\theta_{far}$), der zwischen dem Kraftfahrzeug und einem Abschnitt der Straße, auf der das Kraftfahrzeug fährt und der von dem Kraftfahrzeug entfernt ist, gebildet wird, und
- einem zweiten Winkel ($\theta_{near}$), der von einem Winkel ($\theta_{prox}$) abhängt, der zwischen dem Kraftfahrzeug und einem anderen Abschnitt der Straße, der in der Nähe des Kraftfahrzeugs liegt, gebildet wird, wobei der erste ($\theta_{far}$) und der zweite Winkel ($\theta_{near}$) in Abhängigkeit von dem Datenelement bezüglich der Umgebung, in der sich das Kraftfahrzeug fortbewegt, bestimmt werden.

3. Verfahren nach dem vorhergehenden Anspruch, wobei in Schritt c1) der zweite Winkel ($\theta_{near}$) umso mehr auf den Wert der Zielposition ($\hat{\delta}_{SW}$) Einfluss nimmt, je kleiner die Geschwindigkeit (v) des Fahrzeugs ist.

4. Verfahren nach einem der vorhergehenden Ansprüche, wobei in Schritt c3) die Zielgröße ($\hat{\Gamma}_d$) mit Hilfe eines mathematischen Modells bestimmt wird, das für das neuromuskuläre Verhalten des Fahrers repräsentativ ist und das seine neuromuskuläre Reaktionszeit (Tn) und/oder seine Steifheit beim Fahren berücksichtigt.

5. Verfahren nach dem vorhergehenden Anspruch, wobei die neuromuskuläre Reaktionszeit (Tn) und/oder die Steifheit beim Fahren des Fahrers während eines Identifikationsschritts, der vor den Schritten a) bis f) durchgeführt wird, in Abhängigkeit von mehreren aufeinanderfolgenden Erfassungen der tatsächlichen Position ($\delta_d$) des Steuerelements des Fahrzeugs, dem Datenelement bezüglich der Umgebung, in der sich das Kraftfahrzeug fortbewegt, und der tatsächlichen Größe ($\Gamma_d$), die für einen Bedienvorgang des Fahrers an dem Steuerelement repräsentativ ist, bestimmt werden.

6. Verfahren nach einem der vorhergehenden Ansprüche, wobei in Schritt c3) die Zielgröße ($\hat{\Gamma}_d$) in Abhängigkeit von mehreren aufeinanderfolgenden Erfassungen der tatsächlichen Position ($\delta_d$) des Steuerelements des Fahrzeugs und/oder in Abhängigkeit von mehreren aufeinanderfolgenden Erfassungen des Datenelements bezüglich der Umgebung, in der sich das Kraftfahrzeug fortbewegt, bestimmt wird.

7. Verfahren nach einem der vorhergehenden Ansprüche, wobei die Position des Steuerelements des Kraftfahrzeugs die Winkelposition eines Lenkrads dieses Kraftfahrzeugs ist.

8. Verfahren nach einem der vorhergehenden Ansprüche, wobei:

- die Zielgröße ($\hat{\Gamma}_d$) ein Zieldrehmoment ($\hat{\Gamma}_d$) ist, das der Fahrer auf das Lenkrad des Fahrzeugs ausüben sollte, wenn sein Aufmerksamkeitsgrad hoch wäre, und
- die tatsächliche Größe ($\Gamma_d$) das von dem Fahrer tatsächlich auf das Lenkrad des Fahrzeugs ausgeübte Drehmoment ($\Gamma_d$) ist.

9. Verfahren zur Stimulierung der Aufmerksamkeit eines Fahrers eines Kraftfahrzeugs, während dessen Folgendes erfolgt:

   - Bestimmen eines Aufmerksamkeitsgrades des Fahrers des Fahrzeugs durch Ausführung eines Verfahrens nach einem der vorhergehenden Ansprüche und
   - Auslösen eines Warnsignals für den Fahrer, wenn der zuvor bestimmte Aufmerksamkeitsgrad kleiner als eine vorgegebene Aufmerksamkeitsschwelle ist.

**Claims**

1. Method for determining an attention level of a driver of a motor vehicle, comprising the following steps, execution of the set of steps a) to e) being repeated continuously:

   a) an actual position ($\delta_d$) of a driving member of the motor vehicle is acquired,
   b) at least one datum relative to an environment in which said motor vehicle is being driven is acquired,
   c1) depending on said datum relative to the environment in which the motor vehicle is being driven, a target position ($\hat{\delta}_{SW}$) in which the driving member should be placed if the attention level of the driver is high is determined,
   c2) a restoring quantity ($\Gamma_s$) of the driving member is determined depending at least on the actual position ($\delta_d$) of this driving member, said restoring quantity tending to return the driving member to a rest position,
   c3) a target quantity ($\hat{\Gamma}_d$) representative of an action that the driver should apply to said driving member if the attention level of the driver is high is determined, depending on the target position ($\hat{\delta}_{SW}$), on the actual position ($\delta_d$) of the driving member of the vehicle, and on said restoring quantity ($\Gamma_s$) of the driving member,
   d) an actual quantity ($\Gamma_d$) representative of a control action of the driver on said driving member is acquired,
   e) said actual quantity ($\Gamma_d$) and said target quantity ($\hat{\Gamma}_d$) are compared by computing a difference (TPE(k)) between said actual quantity ($\Gamma_d$) and said target quantity ($\hat{\Gamma}_d$),
   f) said attention level is determined depending on the result of the comparison carried out in step e) by selecting the differences (TPE(j)) computed in a first time interval, and by computing a first effective value ($VE_C(k)$) of the selected differences (TPE(j)), so as to deduce said attention level of the driver of the motor vehicle depending on said first effective value ($VE_C(k)$),
   **characterized in that**, in step f), the differences (TPE(j)) computed in a second time interval longer than the first time interval are selected, a second effective value ($VE_L(k)$) of the selected differences (TPE(j)) is computed, and said attention level of the driver of the motor vehicle is deduced depending on said second effective value ($VE_L(k)$).

2. Method according to the preceding claim, wherein said target position ($\hat{\delta}_{SW}$) is determined, in step c1), depending:

   - on a first angle ($\theta_{far}$), made between the motor vehicle and a segment of the road over which said motor vehicle is driving being driven, which segment is far from the motor vehicle, and
   - on a second angle ($\theta_{near}$), which is dependent on an angle ($\theta_{prox}$) made between the motor vehicle and another segment of said road, which segment is close to the motor vehicle,
   - said first angle ($\theta_{far}$) and second angle ($\theta_{near}$) being determined depending on said datum relative to the environment in which the motor vehicle is being driven.

3. Method according to the preceding claim, wherein, in step c1), the influence of said second angle ($\theta_{near}$) on the value of said target position ($\hat{\delta}_{SW}$) increases as the speed (v) of the vehicle decreases.

4. Method according to one of the preceding claims, wherein said target quantity ($\hat{\Gamma}_d$) is determined, in step c3), by means of a mathematical model that is representative of the neuromuscular behaviour of the driver and that takes into account the neuromuscular reaction time (Tn) and/or driving stiffness of the driver.

5. Method according to the preceding claim, wherein the neuromuscular reaction time (Tn) and/or the driving stiffness of the driver are determined in an identifying step carried out prior to step a) to f), depending on a plurality of successive acquisitions of the actual position ($\delta_d$) of the driving member of the vehicle, of the datum relative to the environment in which the motor vehicle is being driven, and of the actual quantity ($\Gamma_d$) representative of a control action of the driver on said driving member.

6. Method according to one of the preceding claims, wherein said target quantity ($\hat{\Gamma}_d$) is determined, in step c3), depending on a plurality of successive acquisitions of the actual position ($\delta_d$) of the driving member of the vehicle and/or depending on a plurality of successive acquisitions of the datum relative to the environment in which the motor vehicle is being driven.

7. Method according to one of the preceding claims, wherein said position of the driving member of the motor vehicle is the angular position of a steering wheel of this motor vehicle.

8. Method according to one of the preceding claims, wherein:

   - said target quantity ($\hat{\Gamma}_d$) is a target torque ($\hat{\Gamma}_d$) that the driver should exert on the steering wheel of the vehicle if the attention level of the driver is high, and
   - said actual quantity ($\Gamma_d$) is the torque ($\Gamma_d$) actually exerted by the driver on the steering wheel of the vehicle.

9. Method for stimulating the attention of a driver of a motor vehicle, in which method:

   - an attention level of the driver of the vehicle is determined by executing a method according to one of the preceding claims, and
   - a warning signal intended for the driver is triggered when the attention level determined beforehand is lower than a predetermined attention threshold.

**Fig.1**

**Fig.2**

# Fig.3A

# Fig.3B

# Fig.3C

# Fig.3D

Fig.4A

Fig.4B

Fig.4C

Fig.4D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6061610 A
- DE 112012006127 T5
- WO 03039914 A1
- DE 102005026479 A1